# EUROPEAN PATENT SPECIFICATION

(11) **EP 2 235 334 B1**
(45) Date of publication and mention of the grant of the patent: **29.05.2013**
(21) Application number: 07872832.6
(22) Date of filing: 21.12.2007
(51) Int. Cl.: F01N 3/02, F01N 5/04, F02B 37/013, F01N 3/20

(54) **ARRANGEMENT FOR AN EXHAUST LINE OF AN INTERNAL COMBUSTION ENGINE**
ANORDNUNG FÜR EINE ABGASLEITUNG EINES VERBRENNUNGSMOTORS
AGENCEMENT POUR UNE LIGNE D'ÉCHAPPEMENT D'UN MOTEUR À COMBUSTION INTERNE

(43) Date of publication of application: 06.10.2010
(73) Proprietor: Renault Trucks, 69800 Saint Priest (FR)
(72) Inventor: LEJEUNE, Marc, 69002 Lyon (FR)
(74) Representative: Putet, Gilles
(86) International application number: PCT/IB2007/004447
(87) International publication number: WO 2009/081233

(56) References cited:
- EP-A- 1 195 502
- WO-A-2004/097195
- WO-A-2007/118078
- DE-A1-102004 019 659
- JP-A- 63 309 727
- US-B1- 6 651 432

## Description

### Field of the invention

The present invention concerns an arrangement for an exhaust line of an internal combustion engine.

### Technological background

Environmental legislations require that any vehicle propelled by an internal combustion engine, including diesel engine, treat exhaust gas to reduce the level of toxicity of the emissions.

Exhaust gas produced by a diesel engine includes gas such as hydrocarbon, carbon monoxide and nitrogen oxide as well as soot that is to say unburnt particulate matter (PM) of diesel fuel.

To this end, vehicles are fitted with purification equipment such as selective catalytic reduction (SCR) units and diesel particulate filters (DPF) for diesel engines.

A SCR unit is an exhaust gas purification device that can be found on an exhaust line and which is dedicated to transforming the nitrogen oxides into water and nitrogen gas (N2). A SCR unit comprises a catalytic converter, where, in presence of a catalysing agent (NH3), there takes place a selective catalytic reduction of nitrogen oxides (NOx).

A diesel particulate filter has a removal action on unburnt particles that are found in exhaust gas. Polluting particles are collected in a filter and, thus, are not rejected into the atmosphere. In a process known as filter regeneration, accumulated particles are burnt when the filter load reaches a predetermined level. For the filter regeneration operation, the filter can be heated at a temperature leading to combustion of the particles. For a complete combustion of the particulates, the exhaust gases circulating in the DPF have to reach a temperature of above 600°C. To reach such a high temperature, a vehicle exhaust line can be provided with a fuel burner that heats the exhaust gases to a temperature of around 600°C which enables soot combustion.

At relatively low temperature (i.e. between 250°C and 450°C), the engine produces N02 which oxidizes the particulates. Future air legislations are expected to make N02 regeneration more difficult as regulations on nitrogen oxide levels are expected to be tightened.

Although, the combination of a DFP and an SCR unit contributes to significantly cleaner exhaust gas, some issues remain unsolved.

As a high temperature is required to combust accumulated soot, it becomes necessary to include a burner wherein fuel is injected and burnt; this is detrimental to a vehicle energetic efficiency as fuel is not used for vehicular propulsion and total fuel consumption is increased.

A further disadvantage of the current exhaust arrangement is that the repeated regeneration operations which require a temperature of 600°C and above can cause damages to the SCR unit and reduces its efficiency. JP-63.309.727 discloses an after-burner device and a catalyst in an exhaust passage between two turbines.

### Summary of the invention

In this technical context, it is an object of the invention to improve the overall efficiency of an internal combustion engine equipped with depollution equipments.

A further object of the invention is to improve the durability of the depollution equipment found on the exhaust line of an internal combustion engine.

The invention concerns an arrangement for an exhaust line of an internal combustion engine comprising a fuel burner located upstream of a diesel particulate filter, and a selective catalytic reduction unit. The arrangement further comprises a first turbine connected to an energy recovering means interposed on the engine exhaust line between the diesel particulate filter and the SCR unit.

The invention makes provision for introducing a turbine downstream of the diesel particulate filter and upstream of the SCR unit. This proves to be a very advantageous arrangement on at least two grounds. Firstly, the invention makes it possible to convert into useful work the thermal energy released by the filter regeneration which, in a conventional exhaust line, is wasted. Secondly, the SCR unit has the further effect of lowering the temperature entering the SCR unit which, in a conventional exhaust line is fed with high temperature exhaust gas that has a detrimental effect on the life span of the SCR unit. The overall gain of the arrangement according to the invention is therefore significant in terms of overall engine output and of SCR unit life expectancy.

In an embodiment of the invention, the first turbine that is positioned directly downstream of the diesel particulate filter and directly upstream of the selective catalytic reduction unit is connected to an engine crankshaft via mechanical or electrical or hydraulic systems. The energy recovered from the exhaust gas heated by the burner is directly used on the engine crankshaft in a turbo-compound.

In another embodiment of the invention, the first turbine is linked by shared axle to a compressor that delivers pressurized air to an engine air intake. The exhaust gas found downstream of the diesel particulate filter and heated by the fuel burner is thus used in a turbocharger.

It is envisaged that the exhaust line includes a turbocharger comprised of a second turbine positioned upstream of the burner and a compressor linked by a shared axle delivering pressurized air into the engine air intake. The turbo charger makes provision for a first stage of supercharging while the turbine associated in a turbo-compound or in a turbocharger makes provision for a second stage of supercharging.

In yet another embodiment of the invention, the exhaust line can comprise an exhaust gas recirculation pipe which is connected to the exhaust line downstream of the said first turbine.

### Brief description of the drawings

Fig. 1 is a schematic view showing an arrangement for an exhaust line according to an exemplary embodiment of the present invention,
Fig. 2 is a schematic view of another exemplary embodiment of the invention.

### Description of the invention

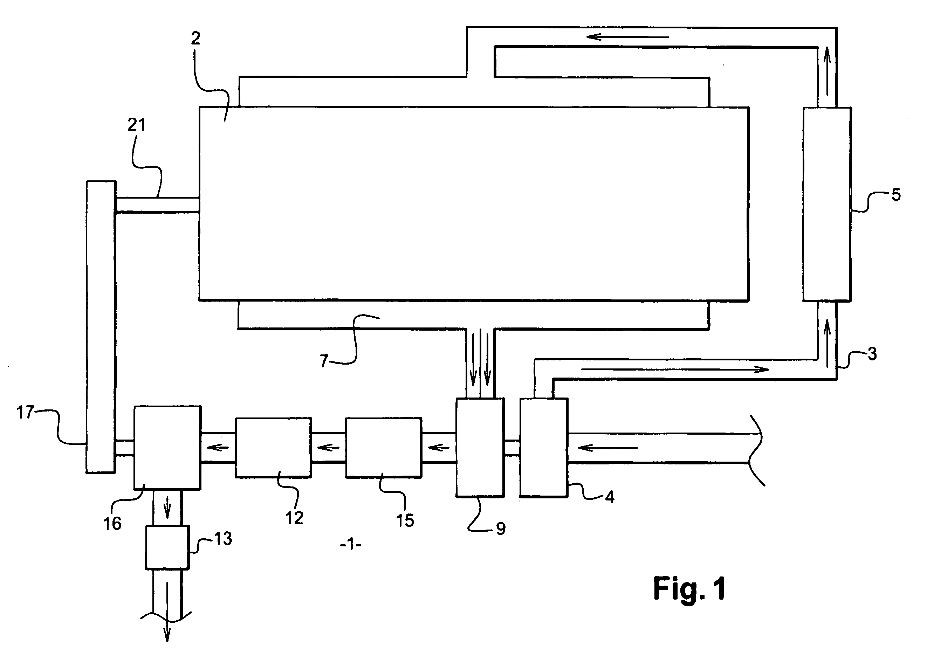

Fig. 1 shows an internal combustion engine 2 that is equipped with a turbocharger. The internal combustion engine 2 is a diesel engine that releases exhaust gas; exhaust gas emitted by a diesel engine contains diesel particulate matter (PM) mainly carbon, that is not burnt in the power stroke.

As it is common on diesel engines, the engine of Fig 1 is equipped with a turbocharger. The turbocharger can be a variable geometry turbocharger.

As depicted on Fig. 1, intake air is carried through an intake line 3 feeding the engine 2. The air intake line 3 can suitably include a compressor 4. An air intake cooler 5 is provided in the intake line 3 to lower the temperature of the intake air before the intake air enters the engine 2.

Exhaust gas formed in the internal combustion engine 2 is collected by an exhaust manifold 7 and, then, carried through an exhaust line 8 towards the atmosphere.

The exhaust line 8 can suitably comprise a turbine 9 driven by the exhaust gas; the turbine 9 is mechanically connected to the compressor 4 by means of a corresponding shaft 10.

The exhaust line 8 is fitted with depollution equipments that include a diesel particulate filter (DPF) 12 and a selective catalytic conversion (SCR) unit 13.

The DPF 12 includes a ceramic filter where diesel particulate matters are trapped. Linked to the diesel particulate filter 12, is a fuel burner 15 that increases exhaust gas temperature to a level (above 600°C) that causes combustion of the particulate matters trapped in the DPF. The burner 15 can suitably include one or several injectors for injecting fuel supplied from a fuel injection pump, additional fresh air feed which can be supplied from an air pump, and an ignition means to initiate the combustion of the fuel. Within the burner 15, fuel can burn in a diffusion flame or at the surface of a catalyst, or a combination of both.

The exhaust line 8 can include one or more sensors (not shown) that monitor the level of particulates in the DPF 12, conventionally by measuring the back pressure before the DPF 12. The signals measured by the sensors are fed to a controller where, according to a preprogrammed routine; the controller makes a decision on when to activate a regeneration cycle. In concrete terms, when the exhaust gas pressure measured upstream of the DPF 12 drops below a preset value, the controller initiates a regeneration cycle.

The SCR unit 13 has a cleaning action on the exhaust gas by an oxidation/reduction reaction that reduces undesirable emissions of nitrogen oxides (NOx). Urea can be sprayed into the exhaust gas 8 prior to entering into the SCR unit 13.

An important aspect of the exhaust arrangement according to the invention lies in the fact that a turbine 16 linked to a recovery energy equipment that is, in the illustrated embodiment, a turbo-compound, 17 is interposed between the DPF 12 and the SCR unit 13.

This turbine 16 has a major effect on the operation of the exhaust arrangement. The turbine 16 and the energy recovery equipment linked to the turbine have a significant combined effect as, on the one hand, the turbine 16 reduces the temperature of the exhaust gas entering the SCR unit 13 and, on the other hand, the turbine 16 recovers a part of the energy provided by the burner 15 and of the energy released by the exothermic combustion of the particulate matters.

The temperature drop across the turbine 16 proves to have a favourable effect on the durability of the SCR unit 13 which is an expensive vehicular piece of equipment. Unlike exhaust line of the prior art wherein the SCR unit 13 can be submitted to peaks of temperature, each time the DPF 12 requires a regeneration cycle, which is highly detrimental to the SCR unit 13 life expectancy, the exhaust arrangement of the invention makes it possible to lower the temperature of the exhaust gas entering the SCR unit 13 which has, therefore, a beneficial effect on the SCR unit life expectancy.

In the embodiment of Fig 1, the turbine 16 is part of so-called turbo-compound assembly and is linked to an engine crankshaft 21 via a set of cascaded gear trains and a hydraulic coupler. The turbine 16 can be connected to the crankshaft 21 mechanically, but electrical or hydraulic connection can be also be envisaged. In this embodiment, the energy recovered by the turbine is directly transformed into work on the engine crankshaft 21.

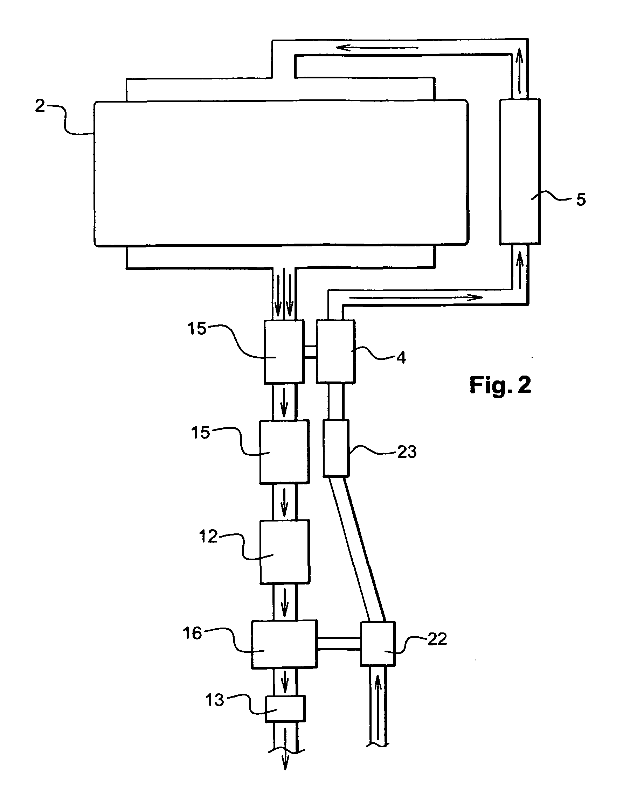

In the embodiment illustrated on Fig 2, the turbine 16 is linked to a compressor 22. Thus this embodiment makes provision for a two stage turbo-charging. A cooler 23 can be suitably positioned between the compressor 22 and the air intake so as to lower the temperature of air entering into the engine.

It is important to notice that the embodiment illustrated on Fig 2 includes essential feature of invention. That is to say, in an exhaust line equipped with depollution devices, the invention makes provision for a turbine 16 located downstream of a DPF 12 and upstream of a SCR unit 13.

In a vehicle having an Exhaust Gas Recirculation (EGR) system, it can be envisaged to route a pipe from the exhaust line, downstream of the recovery turbine 16, to the intake line to benefit from low temperature exhaust gas that can be recirculated back into the engine cylinders. Incoming air with recirculated exhaust gas limits the generation of NOx as recirculated exhaust gas reduces the proportion of excess oxygen in the incoming air and exhaust gas piped downstream of the turbine has a low temperature.

The invention is not limited to the illustrative embodiments described above and shown in the drawings, but can be varied within the scope of the following claims.

## Claims

1. An arrangement (1) for an exhaust line (8) of an internal combustion engine (2) having a fuel burner (15) located upstream of a diesel particulate filter (12) and a selective catalytic conversion unit (13),
**characterized in that** the arrangement further comprises a first turbine (16) connected to an energy recovering means, interposed on the engine exhaust line (8) between the diesel particulate filter (12) and the SCR unit (13).

2. The arrangement according to claim 1, **characterized in that** the first turbine (16) is connected to an engine crankshaft (21) via a mechanical or electrical or hydraulic system.

3. The arrangement according to claim 1, **characterized in that** the first turbine (16) is linked by a shared axle to a compressor (22) that delivers pressurized air to an engine air intake (3).

4. The arrangement according to one of claims 1 to 3, **characterized in that** the exhaust line (8) includes a turbocharger comprised of a second turbine (8) positioned upstream of the burner (15) and a compressor (4) linked by a shared axle (10) delivering pressurized air into the engine air intake (3).

5. The arrangement according to one of claims 1 to 4, **characterized in that** the exhaust line comprises an exhaust gas recirculation pipe which is connected to the exhaust line downstream of first turbine.

## Patentansprüche

1. Anordnung (1) für eine Abgasleitung (8) eines Verbrennungsmotors (2) mit einem Kraftstoffbrenner (15), der stromaufwärts eines Dieselpartikelfilters (12) angeordnet ist, und einer selektiven Katalysatoreinheit (13),
**dadurch gekennzeichnet, dass** die Anordnung außerdem eine erste, mit einer Energierückgewinnungseinrichtung verbundene Turbine (16) umfasst, die an der Motorabgasleitung (8) zwischen dem Dieselpartikelfilter (12) und der SCR-Einheit (13) angeordnet ist.

2. Anordnung nach Anspruch 1, **dadurch gekennzeichnet, dass** die erste Turbine (16) über ein mechanisches oder elektrisches oder hydraulisches System mit einer Motorkurbelwelle (21) verbunden ist.

3. Anordnung nach Anspruch 1, **dadurch gekennzeichnet, dass** die erste Turbine (16) mittels einer gemeinsamen Achse mit einem Kompressor (22) gekoppelt ist, der unter Druck gesetzte Luft an einen Motorlufteinlass (3) liefert.

4. Anordnung nach einem der Ansprüche 1 bis 3, **dadurch gekennzeichnet, dass** die Abgasleitung (8) einen Turbolader aufweist, der eine zweite Turbine (8), die stromaufwärts des Brenners (15) angeordnet ist, und einen durch eine gemeinsame Achse (10) gekoppelten Kompressor (4) umfasst, der unter Druck gesetzte Luft in den Motorlufteinlass (3) liefert.

5. Anordnung nach einem der Ansprüche 1 bis 4, **dadurch gekennzeichnet, dass** die Abgasleitung ein Abgasrückführungsrohr umfasst, das mit der Abgasleitung stromabwärts der ersten Turbine verbunden ist.

## Revendications

1. Agencement (1) pour une ligne d'échappement (8) d'un moteur à combustion interne (2) ayant un brûleur de carburant (15) situé en amont d'un filtre à particules diesel (12) et une unité de conversion catalytique sélective (13),
**caractérisé en ce que** l'agencement comprend en outre une première turbine (16) connectée à un moyen de récupération d'énergie, interposée dans la ligne d'échappement du moteur (8) entre le filtre à particules diesel (12) et l'unité SCR (13).

2. Agencement selon la revendication 1, **caractérisé en ce que** la première turbine (16) est connectée à un vilebrequin du moteur (21) par le biais d'un système mécanique ou électrique ou hydraulique.

3. Agencement selon la revendication 1, **caractérisé en ce que** la première turbine (16) est reliée par un arbre commun à un compresseur (22) qui fournit de l'air sous pression à une admission d'air (3) du moteur.

4. Agencement selon l'une quelconque des revendications 1 à 3, **caractérisé en ce que** la ligne d'échappement (8) comporte un turbocompresseur constitué d'une deuxième turbine (8) positionnée en amont du brûleur de carburant (15) et d'un compresseur (4) reliés par un arbre commun (10) fournissant de l'air sous pression dans l'admission d'air (3) du moteur.

5. Agencement selon l'une quelconque des revendications 1 à 4, **caractérisé en ce que** la ligne d'échappement comprend une conduite de recirculation de gaz d'échappement qui est connectée à la ligne d'échappement en aval de la première turbine.
